# EUROPEAN PATENT APPLICATION

(11) **EP 1 312 254 A1**
(43) Date of publication of application: **21.05.2003**
(21) Application number: 02258007.0
(22) Date of filing: 20.11.2002
(51) Int. Cl.: A01G 9/10

(54) **Species specific biomass eclosor**

(30) Priority: 20.11.2001 CL 28252001
(71) Applicant: Gutierrez Pavez, Victor Hugo, Vitacura, Santiago (CL)
(72) Inventor: Gutierrez Pavez, Victor Hugo, Vitacura, Santiago (CL)
(74) Representative: Ablewhite, Alan James

(57) **Abstract**

The production of natural and highly functional vegetables for human nutrition under conditions of having a substrate that will provide optimal conditions specific to each so as to achieve a maximum use of all biotic and abiotic elements for optimal germination and growth of vegetable organisms, is maximized by producing a species-specific biomass eclosor, herein called EBES, which is the live or latently alive set of chemical, biochemical, biological and other specific related ingredients of the species that induce eclosion or germination in addition to providing nutritional-alimentary support specific to each plant throughout its entire productive cycle. This invention is applicable to optimise germination, growth and production of any type of cultivable vegetable and is also applicable to the human world.

## Description

In the field of vegetable production, organisms must have essential materials to reproduce and prosper in a certain situation that are required for development and their reproduction.

These basic requirements vary according to the species and the situation. In a constant state, the essential material available in quantities that best approach the critical minimum necessary will tend to be limitative material. Each species in particular possesses factors that limit their development, which are intrinsic to the species and their environment or ecological niche.

This is exactly the situation that this patent application for the species-specific biomass eclosor, a product that will be called EBES in this invention and which is the principal objective of this invention.

In turn, the existence and prosperity of an organism depends on the completeness of a set of conditions. The absence or deterioration of an organism may be due to a qualitative or quantitative deficiency or excess with respect to any one of several factors that perhaps approach the limits of tolerance of the organism in question.

Not only may the absence of something but also the excess of something constitute a restriction on growth. EBES corrects this distortion, which occurs in all systems of vegetable production and inhibits the germination and growth of vegetables, causing results different from what occur under optimal conditions.

In reference to technological solutions to the problem that have arisen over time, progress has only been made in the formulation and fabrication of fertilizers and nutrients that do not allow plants to find a system of optimal germination, growth and development because they do not suffice to complete the set of conditions that permit the desired optimal existence and prosperity. The optimal growing conditions of a vegetable organism stem from countless factors, but work has been done both physiologically as well as biochemically on the needs of plants, principally in families and, to a lesser degree, on specificity in species, subspecies or new varieties. Even though this cumulus of highly specialized technical information is available, the common farmer cannot interpret it in full for several reasons, such as: knowledge, availability of inputs, ancient farming techniques and practices, etc. The EBES is sustained principally on the following biological constant: "The biomass development and productivity of live organisms will depend largely on the nutrition and nourishment that they receive in the early stages of life." Technological solutions to this problem that the EBES will present will be intrirsic to the EBES and will be the result of all the disciplines mentioned in this invention whose ultimate purpose will be the living or latently alive "SPECIES-SPECIFIC SUBSTRATE", which will need a certain organism for its appropriate future development

The EBES is a Live or Latently Alive Substrate Product that is biodynamic and multisistomic and produces the desired conditions specific to an optimal germination and growth of vegetable organisms. It is a prop that offers protection, optimal microbiological conditions of moisture and temperature, rooting and nutrition of vegetables, depositing it in its place of eclosion, germination and definitive production.

The EBES is the live or latently alive set of species-specific chemical, biochemical, biological and other related ingredients which induce eclosion or germination. It also provides nourishment and nutritional support specific to the plant, using the following ingredients and products for formulation, with their percentage ranges.
- All forms of free amino acids, from 0.2 to 25%.
- All forms of free and combined amino acids, from 0.2 to 30%.
- High and low molecular weight peptides, between 0.1 to 30%.
- Proteins, from 0.2 to 25%.
- Lipids, from 0.05% to 12%.
- Carbohydrates, from 0.5 to 45%
- Biodegradable vegetable and animal fibers, from 0.5 to 30%.
- Enzymes, co-enzymes, apoenzymes and other hydrosoluble and liposoluble vitamin complexes, from 0.005 to 3%.
- Fulvic, humic, acetic acids and other acids beneficial to soil, from 0.00001 to 2.5%.
- Species-specific glycoproteins with a B1-4 and B1-2 glucositic link and other forms, from 0.1 to 25%.
- Species-specific cryoprotective sugars, from 0.1 to 35%.
- Sorbitol, from 0.1 to 10%.
- Glucose, from 0.1 to 15%.
- Mannose, from 0.1 to 10%.
- Gums, from 0.05 to 15%.
- Trehalose, from 0.1 to 20%.
- Chitin, from 0.05 to 12%.
- Chitinaise, chitosanase, β-1, 3-gluconase, from 0.001 to 20%.
- Chitosan, caboxymethyl chitosan, from 0.001 to 10%.
- Polymers, copolymers and other forms, from 0.2 to 98%.
- Pullulan and other biodegradable biopolymers, from 0.1 to 99%.
- Prebiotics, from 0.05 to 10%.
- Straligraphic layers of the ecological succession of species-specific biodiversified edaphic microflora and microfauna, from 1 to 90%.
- Natural herbal extracts, from 0.00001 to 2%.
- Sea and fresh water algae and extracts, from 0.001 to 10%.
- Soil bacteria, fungi, and algae in natural non-vegetative and vegetative forms, between 0.001 to 5%.
- Vegetative and non-vegetative forms of arbusclar mychorrhizal fungi of the Zygomycetes or Glomales Order, Glomus sp, Glomus etunicatum, Glomus moseae; Basidiomycetes or Ascomycetes, Actinomycetes, Rhizobios, Bacillus thuringiensis, Boophilus microplus, Azaderactin and natural symbiotic soil bacteria, from 0.001 to 2.5%.
- Mychorrhizal, ectomychorrhizal and endomychorrhizal systems, from 0.005 to 2%.
- Nitrogen- and phosphorus-fixing probiotic bacteria, from 0.005 to 5%.
- Methyltrophic and methansulfonic acidic bacteria, from 0.001 to 5%.
- Yeasts and their extracts, from 0.001 to 10%.
- All means of cultivation that result in an optimal association between root-mychorrhiza, together with their natural edaphic biotopes, from 0.00001 to 25%.
- Symbiotic and biocontrol action products, from 0.05 to 10%.
- All systems that directly and indirectly optimize the fertility and nutrition of all forms of live organisms, from 0.005 to 99.5%.
- pH and salinity modifiers or blockers, self-defense inducers, natural bioactivators, solid chelate correctors, from 0.01 to 10%.
- Chitinase synthesizing bacteria, from 0.001 to 5%.
- Nitrogen-fixing bacteria, from 0.001 to 2%
- Photosynthates that produce chitoquinines, phytoalexins and color inducers, from 0.001 to 2%.
- Microencapsulated and/or lyophilisated organisms, from 0.001 to 1%.
- Colloidal mycelia and liposomes, from 0.002 to 10%.
- Saturated, monounsaturated and polyunsaturated fatty acids, from 0.005 to 10%.
- Exergonic and endergonic inorganic compounds, from 0.005 to 99.9%.
- Elements that foster humidity, cationic interchange, a degree of organic waste decomposition, water soluble electrolytes from the EBES substrate, mineral and organic colloidal complexes versus fertility in glycophyte and halophyte plants, from 0.05 to 70%.
- Aerating and mulch-forming systems, from 0.5 to 35%.
- Multiporous mulch systems of microirrigation with virtual humidity-containment barriers, from 0.5 to 90%.
- All physical, chemical, biological and biochemical designs of the EBES that result in a good development of cultivable organisms, from 0.001 to 100%.
- All "osmotic drought" or hydric stress depressants, from 0.05 to 5%.
- All isomeric forms of esters and other biochemical products, from 0.002 to 10%.
- Phospholipids, from 0.1 to 10%.
- Mineral salts, from 0.01 to 10%.
- Mineral de-blocking enzymes such as chitocrome (iron), phospholipase (manganese), nitrate reductase (molybdenum), dehydrogens (copper), phosphorilase (iron), auxin enzyme (zinc), from 0.00001 to 1%.
- Expanded clay, arlite, vermiculite or other microporous mineral substrates, from 0.1 to 10%.
- Oligoelements from 0.005 to 2%.
- Organic and inorganic acids, from 0.1 to 5%.
- Ionic interchange resins, polymers and biodegradable copolymers, that may be of any color, brilliance or chromatic effect, from 0.1 to 20%.
- Cellulose, from 0.2 to 90%.
- Rice, wheat, flax or other vegetable straws, from 0.1 to 80%.
- Neem oil, from 0.001 to 2%.
- Saponins or their crude extracts, from 0.001 to 2%.
- Tanins, from 0.001 to 5%.
- Pigments: chlorophyll, hemocyanine, phycocyanine, phycoeritrin, diatomine, cryptoxantin, anthocyanines, leucoanthocyanines and all their bathochromic and hyperchromic copigmentators, lutein, zeaxantin, carotenes and other antioxidants and chromogenic immunostimulants, from 0.01 to 2%.
- Hemoglobin and other porphyrins, from 0.001 to 3%.
- Flavonoides, from 0.002 to 2%.
- Organic manure, from 0.5 to 15%.
- Ensiled manure and other manures, from 0.5 to 20%.
- Partial and total protein hydrolysate, from 0.2 to 30%.
- Fish solubles, from 0.1 to 15%.
- Marine and fresh water algae, from 0.05 to 25%.
- Peat, from 0.05 to 20%.
- Biodynamic compost, from 0.001 to 80%.
- Vegetable humus, from 0.05 to 80%.
- Edaphic microfauna, from 0.001 to 2%.
- Stechiometrically balanced species-specific ashes, from 0.001 to 5%.
- Total natural vegetable and animal components vacuum-extracted at low temperatures, from 0.001 to 80%.
- Growth promoters, from 0.0001 to 2%.
- Phytohormones such as chitoquinines, auxins, giberelins, abcisic acid, jasmatic acid and other phytohormones, animal hormones and apoproteins or foam proteins, allosamidin, from 0.0001 to 2%.
- Chitoquinines and auxins in radii or ratios of 5:1, 10:1, 50:1 or other ratios and corresponding percentages, from 0.001 to 2%.
- Peptones, tryptones and other means of cultivation and micropropagation, from 0.0001 to 5%.
- Germination inducers, from 0.02 to 5%.
- Species-specific sodium-potassium bomb, from 0.001 to 2%.
- Hydratants, from 0.2 to 80%.
- Glycerides, from 0.05% to 2%.
- Tocopheroles, from 0.001 to 2%.
- Polyphenols, eugenol, iso-eugenol, clavicol, cinnamic aldehyde and other antioxidants and natural preservatives, from 0.00001 to 2%.
- Antioxidants and any component useful in the physiology and biochemistry of an assimilable organism and/or one that also cooperates in its integral development, from 0.0001 to 5%.

Disciplines are used for the formulation and fabrication of EBES such as biodata processing, algorithmic sequence analysis, alimentary biostechiometry, germoplasm data bank, biotechnology, soil physics, organic and inorganic chemistry, soil microbiology, biochemistry, chemical physics, vegetable physiology, palynology, edaphology, cryptogamic and phanerogamic botany, precision agriculture, tracing, climatology, ecology, agroecology, chemical taxonomy systems, agronomic sciences, biodynamic agriculture, micropropagation, veterinary sciences, alimentary engineering, nutrition, meteorology and biostatistics, glycogeny, criogeny, organogeny, zoology, vermiculture, parasitology, microbiology, evolution, etology, landscape and design, ecotourism, aromatherapy and the development of specific fragrances, ergonomics and all other sciences, arts, trades and elements relating to our object of invention. This is different from direct seeding in which the aforesaid elements and factors have not been considered.

The stages for elaboration of EBES are the following:
1. Investigation and analytical sampling of the germoplasmic and seed forms, germination, vegetation, florescence and fruit of the species, subspecies or variety and environment of its ecological niche.
2. Investigation of its phylogeny (development of the species) and ontogeny (development of the individual).
3. Investigation of biomass productivity.
4. Assays in nahual and protected environments.
5. EBES formulation process.
6. EBES design and fabrication process in which the technology of paper manufacture or other polymers will be used, which will consist of the following elements:
   - A sheet of variable length, width and thickness, which may be multi-layered and/or multiporous, of biodegradable and bioreactive material.
   - The seed will be placed on the upper end, which will have been previously sterilized and analyzed by existing means for its viability, at the required distance and attached to a tape or sheet by means of insertion, pressure, electrostatic attraction, gums or another mechanism.
   - A fine layer of biodegradable material will be used to cover the seed, which will have first been inoculated or microencapsulated with lyophilisate spores of fungi, yeast, bacteria and other beneficial edaphic flora or fauna that form mycorrhiza.
   - The lower part of the EBES will have a water containment layer or system and colloids and it may be designed in a V or other shape. It will also be a biodegradable dark color in order to impede the growth of weeds under the germinable seed.
   - The EBES may be arranged in the form of rolls, briquettes, laminas or another type or design, depending on utilization.
   - The EBES will be comprised of part or all elements, compounds, complexes, systems, chemicals, biochemicals, biological elements and others mentioned above.

### Example:

An example of the application of the EBES invention is:
A cylindrical substrate with a central orifice in the mediastin in which the seed selected from superior plants will be deposited. The substrate will be lined by biodegradable synthetic or organic cloth. Its dimensions will be all those that best adapt to optimal germination, growth and production of the plant

This type of species-specific substrate will be deposited in the earth in an orifice larger than the hydrated substrate, leaving an interior space which will create the optimal conditions of temperature due to the use of mineral salts that provide endergonic and exergonic reactions which produce biophysical, chemical and biostechiometric synergic reactions when they react with water to achieve nutrition-alimentation of vegetables. In the early phases of growth, there will be no other plants near its natural growth radius, principally because they are deposited in an initial orifice deeper than the plantlet, which makes it compete for light, thereby experiencing a greater growth pace.

The other advantages are that the orifice, made with a tool, allows it to root more and better, also because of the mycorrhizal association that will be formed parallel to the eclosion of the seed. It will also offer better protection against animal and man tracks, as well as excessive rain and landslides. The trees and shrubs planted in this way do not need a nursery and the eclosion and germination process occurs with the initial irrigation.

## Claims

1. A procedure to elaborate species-specific biomass eclosion laminate or EBES, **characterized** because it includes the following stages:
- Research and analytical sample of the germoplasmic and seed forms, germination, vegetation, florescence and fruit of the species, subspecies or variety and the environmental of its ecological niche.
- Investigation of its phylogeny, or species development, and ontogeny, or individual development.
- Investigation of biomass productivity.
- Assays in natural and protected environments.
- EBES formulation process.
- The process for design and elaboration of the EBES, in which the technology of paper manufacture or other polymers will be used, which will consist of the following elements:
• A sheet of variable length, width and thickness, which may be multi-layered and/or multiporous, of biodegradable and bioreactive material.
• The seed will be placed on the upper end, which will have been previously sterilized and analyzed by existing means for its viability, at the required distance and attached to a tape or sheet by means of insertion, pressure, electrostatic attraction, gums or another mechanism.
• A fine layer of biodegradable material will be used to cover the seed, which will have first been inoculated or microencapsulated with lyophilisate spores of fungi, yeast, bacteria and other beneficial edaphic flora or fauna that form mycorrhiza.
• The lower part of the EBES will have a water containment layer or system and colloids and it may be designed in a V or other shape. It will also be a biodegradable dark color in order to impede the growth of weeds under the germinable seed.
• The EBES may be arranged in the form of rolls, briquettes, laminas or another type or design, depending on utilization.

2. The EBES in claim 1, **characterized** because it will be comprised of all or part of the following elements, compounds, complexes, systems, chemicals, biochemicals and biological elements:
• All forms of free amino acids
• All forms of free and combined amino acids
• High and low molecular weight peptides
• Proteins
• Lipids
• Carbohydrates
• Biodegradable vegetable and animal fibers
• Enzymes, co-enzymes, apoenzymes and other hydrosoluble and liposoluble vitamin complexes
• Fulvic, humic, acetic acids and other natural acids beneficial to soil
• Species-specific glycoproteins with a B1-4 and B1-2 glucositic link and other forms
• Species-specific cryoprotective sugars
• Sorbitol
• Glucose
• Mannose
• Gums
• Trehalose
• Chitin
• Chitinaise, chitosanase, β-1, 3-gluconase
• Chitosan, caboxymethyl chitosan
• Polymers, copolymers and other forms
• Pullulan and other biodegradable biopolymers
• Prebiotics
• Stratigraphic layers of the ecological succession of species-specific biodiversified edaphic microflora and microfauna
• Herbal extracts
• Sea and fresh water algae and extracts
• Soil bacteria, fungi, and algae in natural non-vegetative and vegetative forms
• Vegetative and non-vegetative forms of arbusclar mychorrhizal fungi of the Zygomycetes or Glomales Order, Glomus sp, Glomus etunicatum, Glomus moseae; Basidiomycetes or Ascomycetes, Actinomycetes, Rhizobios, Bacillus thuringiensis, Boophilus microplus, Azaderactin and natural symbiotic soil bacteria
• Nitrogen- and phosphorus-fixing probiotic bacteria
• Methyltrophic and methansulfonic acidic bacteria
• Yeasts and their extracts
• All means of cultivation that result in an optimal symbiosis between root-mychorrhiza, together with their natural edaphic biotopes
• Symbiotic and biocontrol action products
• All systems that directly and indirectly optimize the fertility and nutrition of all forms of live organisms
• pH and salinity modifiers or blockers, self-defense inducers, natural bioactivators, solid chelate correctors
• Chitinase synthesizing bacteria
• Nitrogen-fixing bacteria
• Photosynthates that produce chitoquinines, phytoalexins and color promoters
• Microencapsulated and/or lyophilisated organisms
• Colloidal mycelia and liposomes
• Saturated, monounsaturated and polyunsaturated fatty acids
• Exergonic and endergonic inorganic compounds
• Elements that foster humidity, cationic interchange, a degree of organic waste decomposition, water soluble electrolytes from the EBES substrate, mineral and organic colloidal complexes versus fertility in glycophyte and halophyte plants
• Aerating and mulch-forming systems
• Muttiporous mulch systems of microirrigation with virtual humidity-containment barriers
• All physical, chemical, biological and biochemical designs of the EBES that result in a good development of cultivable organisms
• All "osmotic drought" or hydric stress depressants
• All isomeric forms of esters
• Phospholipids
• Mineral salts
• Phytohormones such as chitoquinines, auxins, giberelins, abcisic acid, jasmonic acid and other phytohormones, animal hormones and apoproteins or foam proteins, allosamidin
• Chitoquinines and auxins in radii or ratios of 5:1, 10:1, 50:1 or other ratios and corresponding percentages
• Expanded clay, arlite, vermiculite or other microporous mineral substrates
• Oligoelements
• Organic and inorganic acids
• Oligoelements
• Ionic interchange resins, polymers and biodegradable copolymers, that may be of any color, brilliance or chromatic effect
• Cellulose
• Rice, wheat, flax or other vegetable straws
• Neem oil
• Saponins or their crude extracts
• Tanins
• Pigments: chlorophyll, hemocyanine, phycocyanine, phycoeritrin, diatomine, cryptoxantin, anthocyanines, leucoanthocyanines and all their bathochromic and hyperchromic copigmentators, lutein, zeaxantin, carotenes
• Hemoglobin and other porphyrins
• Flavonoides
• Organic manure
• Ensiled manure and other manures
• Partial and total protein hydrolysates
• Fish solubles
• Marine and fresh water algae
• Peat
• Biodynamic compost
• Vegetable humus
• Edaphic microfauna and microflora and their biotopes
• Stechiometrically balanced species-specific ashes
• Growth promoters
• Phytohormones such as chitoquinines, auxins, giberelins, abcisic acid, jasmonic acid and other phytohormones
• Chitoquinines and auxins in ratios or radii of 5:1, 10:1, 50:1 or other ratios
• Peptones, tryptones and other means of cultivation and micropropagation
• Germination inducers, from 0.02 to 5%.
• Species-specific sodium-potassium bomb
• Hydratants
• Glycerides
• Tocopheroles
• Polyphenols, eugenol, iso-eugenol, clavicol, cinnamic aldehyde and other antioxidants and natural preservatives
• Antioxidants and any component useful in the physiology and biochemistry of an assimilable organism and/or one that also cooperates in its integral development

3. The EBES in claim 1, **characterized** because it does not need to be transplanted together with the seed or substrate.

4. The EBES in claim 1, **characterized** because the plant does not suffer stress since it is not transplanted and grows where it initially formed its ecological niche.

5. The EBES in claim 1, **characterized** because it has a darker zone in its inferior face that prevents potential weeds from competing for rooting locations.

6. The EBES in claim 1, **characterized** because the seed is first sterilized and innoculated with selected micorrhizal fungi spores, although the plant is capable of ensuring its own reserves of the seed since those reserves are contained in the EBES because of its species-specific constitution.

7. The EBES in claim 1, **characterized** because physiologically, both in vegetables as well as in animals, the conditions of viability of the seed as well as the egg, together with the nutritional-alimentary richness of the initial foods, will be elemental to the productive future of this live being as the EBES is conceived and formulated in order for the capacity of plantlet assimilation in the EBES to be optimal because, among other things: all seeds will have the same depth, the same degree of access to water according to the degree of concentration of absorbing biopolymers, a similar planimetry, insolation and irradiance, there will be no immediate competition from weeds that grow under the EBES substrate, the radical hairs of the plantlet during growth will have a species-specific primary substrate throughout the entire EBES substrate.

8. The EBES in claim 1, **characterized** because it may be 100% organically formulated or formulated with components and ingredients of traditional or modern agriculture. Designed and formulated both for exposed fields, greenhouses, hanging crops or other forms.

9. The EBBS in claim 1, **characterized** because it has been formulated with biopolymers that possess a bioavailable anionic and cationic interchange superior to other substrates given the specific stechiometry as well as their hydric regulation.

10. The EBES in claim 1, **characterized** because it can obtain high and even yields in the plantation of garden produces since all seeds are at physiologically studied an ideal depths, distances, planimetry, exposure and are specific to each seed or rootstock.

11. The EBES in claim 1, **characterized** because it is an alive or latently alive substrate that is biodegradable, symbiotic and synergic and can obtain fruit under superior organoleptic and reologic conditions, better yields, better handling and less possibility of cross-contamination as well as a decrease in costs to the farmer.

12. The EBES in claim 1, **characterized** because it may be planted or deposited manually or by means of machines such as tractors, seeders, seed rollers with an automatic and immediate covering of a layer of organic soil of a specific thickness that is required by a certain type of seed, in addition to fractioned and automatic irrigation.

13. The EBES in claim 1, **characterized** because the plantation procedure includes:
- an EBES seed or depository roller for the seeding of garden produce and other products.
- a steel cylinder or bar of a variable length of 1 to 10 meters or more, such bar or axis being affixed to the third point of the tractor or another mechanism; EBES rolls will be arranged on this axis at the required distance.
- parallel to each EBES roll there will be a regulable device which will cover the EBES with organic soil or another mechanism that can place an organic layer or organic dust sprayer above the EBES.
- an automatic irrigation device that irrigates before, at the moment or subsequent to the covering of the EBES. The mechanism will begin to operate when the ends of the EBES roller are manually or automatically on the ground.
- the roller will also have a furrow guide in the form of regulable runners which will exercise more or less pressure on the EBES substrate that will determine the depth at which the EBES substrate will ultimately lie with the seed, which will allow planting according to the establish planimetry. In the case of plant seeding that requires a greater density, the EBES may be designed in the form taminas, which will only be need to be deposited on the prepared ground since they will have a layer above the EBES seeds or a simple organic layer of the required thickness.

14. The EBES in claim 1, **characterized** because it may also be presented in self-irrigating or periodic irrigating structures, which may simulate trees, walls, shrubs or geometric figures such as triangles, spheres, semi-spheres and all other geometric forms with their respective braces, whether mobile or fixed forms of different heights that may contain, for example, flowers or plants of one or several colors, for productive or ornamental purposes, in any public or private locations or infrastructure.

15. The EBES in claim 1, **characterized** because it is unique and original in type, differentiating itself from direct plantation where the formulation and design is stechiometrically species-specific from a chemical and biochemical viewpoint.

16. The EBES in claim 1, **characterized** because it may be produced in the form of dust, microencapsulated, in granules, pellets, in extruded form or otherwise.

17. The EBES in claim 1, **characterized** because it is an alive or latently alive substrate which offers a high degree of specificity and bioavailability of nutrients to growing vegetable organisms in their early stages of life, unlike the soil substrate that is not always an ideal substrate because of several factors and variables, including: over-exploitation, contamination by plaguecidal and herbicidal waste, unequal size fraction, the unequal retention of humidity, the absence of appropriate fertilizers, the degree of rotation, the specific pH, the absence of humus, erosion, etc.
